# EUROPEAN PATENT SPECIFICATION

(11) **EP 1 936 826 B1**
(45) Date of publication and mention of the grant of the patent: **20.11.2013**
(21) Application number: 06292015.2
(22) Date of filing: 20.12.2006
(51) Int. Cl.: H04B 3/46

(54) **Noise management circuit for a remote terminal of a telecommunication system**
Rauschmanagementschaltung für ein entferntes Endgerät eines Telekommunikationssystems
Circuit de gestion du bruit pour un terminal distant d'un système de télécommunication

(43) Date of publication of application: 25.06.2008
(73) Proprietor: Alcatel Lucent, 75007 Paris (FR)
(72) Inventor: Defoort Frank, Cyriel Michel, 9150 Kruibeke-Bazel (BE); Popov, Igor, 2640 Mortsel (BE); Ysebaert, Geert Bert Maarten, 3020 Winksele (Herent) (BE)
(74) Representative: Narmon, Gisèle Marie Thérèse

(56) References cited:
- EP-A- 0 955 744
- EP-A- 1 641 173

## Description

The present invention relates to a noise management circuit for a Remote Terminal of a telecommunication system comprising a Central Office and a plurality of End-Customers, said central office being coupled to first end-customers of said plurality for transmitting first signals to said first end-customers via wires of a first cable binder, via said remote terminal and via first wires of a second cable binder, said remote terminal being further coupled to second end-customers of said plurality for transmitting second signals to said second end-customers via second wires of said second cable binder, and said noise management circuit comprising a Power Spectral Density Shaper adapted to arrange the frequency spectrum of said second signals within a frequency range overlapping the frequency range of said first signals.

Such a noise management circuit is already known in the art, e.g. in a domain of Digital Subscriber Lines DSL more particularly relating to spectral compatibility in mixed Central Office - Remote Terminal or CO - RT deployment. Therein, the first and second wires of the second cable binder are coupled with each other. In order to increase the downstream bitrate of DSL links, the twisted pair links are shortened by bringing fiber deeper into the network and by introducing small Digital Subscriber Line Access Multiplexer's DSLAM closer to the end-customers. Such a Remote Terminal RT equipment is generally located in small boxes in the street, serving 50 to 100 end-customers. A DSLAM located at the operator buildings next to Plain Old Telephone Service POTS equipment is a Central Office CO.

Problems arise when the RT and CO inject downstream DSL signals on their respective lines in the same cable binder towards the end-customers or users, transmit signals which are using overlapping frequency bands with similar transmit power or transmit Power Spectral Density PSD levels. Indeed, due to the crosstalk between twisted pairs in the cable binder between the RT and the houses (users), the relatively strong RT injected downstream signals will cause strong crosstalk noise into the CO injected downstream signals that are attenuated due to their transfer from CO to RT through the cable binder. Especially the highest frequencies of the CO line will be affected (the higher the frequency, the higher the crosstalk coupling). A consequence is that the CO lines via the cable binder are loosing bitrate, and risk on instabilities when the crosstalk from the RT lines is not stable (e.g. when switching on/off those DSL lines).

In last years, a technique called "Downstream PSD Shaping" applied at the RT has been elaborated upon, and the tools for it have been adopted in the VDSL2 standards.

PSD Shaping from RT is a technique where the PSD (Power Spectral Density) of the RT injected signal is shaped as such that it, after being cross-talked to CO lines, will not harm the CO lines more than as if it would have been a CO line.

Key principle in PSD Shaping is that the CO lines must be "protected", in a sense that they should not experience bitrate loss or an increased instability risk.

In other words, for the same frequency range, the shape of the injected RT signal is similar to that of the CO signal attenuated over the CO-RT distance. However, there exists a "split frequency ST" (hereafter also referenced to as f1) that is the start of the upper frequencies that can not be used anymore by the CO lines due to too high loop attenuation. Below the split frequency f1 are the so-called protected CO frequencies. The RT is not allowed to disturb those protected frequencies more than a CO line would do. Above the split frequency f1 are the unprotected CO frequencies, which can be used by the RT to transmit at the maximum allowed PSD. DMT (Discrete Multi Tone) tones above this frequency will contribute most to the performance of the RT lines.

The main problem is thus to know the split frequency f1.

The basic principle of RT - PSD Shaping today is that:
- no configuration changes of CO lines PSD may be requested when introducing a RT; this is because the CO lines are not always under the supervision of the owner of the RT due to local loop unbundling and
- (almost) no impact of CO lines performance is allowed when introducing a RT.

A consequence is that the ST frequency needs to be located high enough in the frequency range, on cost of the performance of RT lines. The CO lines dominate the deployment rules, and the lines connected to the RT need to adapt to it.

When the PSD Shaping would be calculated too optimistically (i.e. the RT signals are not enough suppressed, or split frequency f1 is estimated too low), then a consequence will be bitrate impact on the CO lines together with an increased risk on instabilities of the CO lines.

A too pessimistic PSD Shaping calculation (i.e. the RT signals too much suppressed, or split frequency f1 estimated too high) will cause a lower than needed bitrate at the RT lines, and an increased risk on instabilities of the RT lines.

An object of the present invention is to provide a noise management circuit of the above known type but adapted to overcome the above-mentioned problems.

According to the invention, this object is achieved due to the fact that said noise management circuit further comprises a noise generator adapted to inject a controllable frequency-dependent level of artificial noise into said first signals when passing via said remote terminal.

The idea of the invention is to fix the split frequency f1 at a predetermined value by setting the start frequency of the noise injection circuit accordingly.

While maintaining the rule that no configuration changes can be done on CO lines in order to start RT deployment, it is proposed to enforce in a controlled way a split frequency f1, without increasing the instability risk of CO lines. This is done by injecting artificially noise at the RT location into the CO lines passing that location and in the same binder. This noise injection will make sure that the CO-lines will not load any bits above f1 and as such an artificial split frequency f1 can be enforced, redefining the protected and unprotected frequency bands. This injected noise indeed has at least the same spectrum as the RT injected signals, and makes it impossible for the CO lines to use the frequencies above f1 to transport data.

It is to be noted that the split frequency can be chosen network wide or per RT node.

It is also to be noted that the European Patent Application EP-1641173-A1 (Application No 04292292.2) "Multi-carrier modem transmitter with controlled transmit signal quality degradation for improving stability of operation" of D. Van Bruyssel (23/09/2004) also relates to artificial noise. However, the difference with the present invention is that in the known document the artificial noise is injected on the same line as the one to be stabilized, not on another line as in the present invention.

It is finally to be noted that the European Patent Application EP-0955744-A2 "Capacity allocation for ADSL" of NIPPON ELECTRIC CO [JP] (199911-10) discloses a system for multi-carrier transmission which can secure the transmission capacity under the noise environment whose noise changes cyclically. Therein, a mapping section in an ATU-C (ADSL transceiver unit, central office end) memorizes the bit allocation allocating to each carrier and transmission power allocation using for each carrier at the period that the noise generated at the data transmission to a downstream direction is large and the bit allocation allocating to each carrier and transmission power allocation using for each carrier at the period that the noise generated at the data transmission to an upstream direction is large. And a demapping section in an ATU-R (ADSL transceiver unit, remote terminal end) also memorizes the memorized bit allocation and transmission power allocation. At the time of the data transmission to the downstream direction, the bit allocation and transmission power allocation is allocated to each carrier of the high frequency band, by making the bit rate at the period that the noise generated at the data transmission to the downstream direction is small higher than the bit rate at the period that the noise is large. With this, the transmission capacity to the downstream direction can be secured.

The problem solved by the present application is to increase the downstream bit rate of the DSL links. Although this problem is known in the prior art, the solution implemented in the present application is different from the prior art. None of the known documents hints or suggests the solution proposed by the present application.

Another characterizing embodiment of the present invention is that said power spectral density shaper is adapted to arrange the frequency spectrum of said second signals into a shape that is similar to that of the frequency spectrum of said first signals when passing via said remote terminal within a first frequency range going up to a split-frequency corresponding substantially to the highest frequency of said first signals, and that said noise generator is adapted to inject said artificial noise into said first signals when passing via said remote terminal for a second frequency range of which the lowest frequency substantially corresponds to said split frequency.

In this way, compared to known RT PSD Shaping, there is no longer a risk on creating instabilities at CO lines (when being overoptimistic) or loose in performance at RT lines (when being too pessimistic). This is achieved because the injected noise is a stable (always present) noise that hides all on-off switching of RT connected lines.

In a preferred embodiment, the present invention is further characterized in that said noise management circuit further comprises a frequency detection circuit adapted to define said split frequency.

Further characterizing embodiments of the present noise management circuit are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
- Fig. 1 represents a telecommunication system including a Remote Terminal (RT) with a Power Spectral Density shaper (PSDS) as known from the prior art; and
- Fig. 2 represents a Remote Terminal with a noise management circuit (NIS) according to the invention.

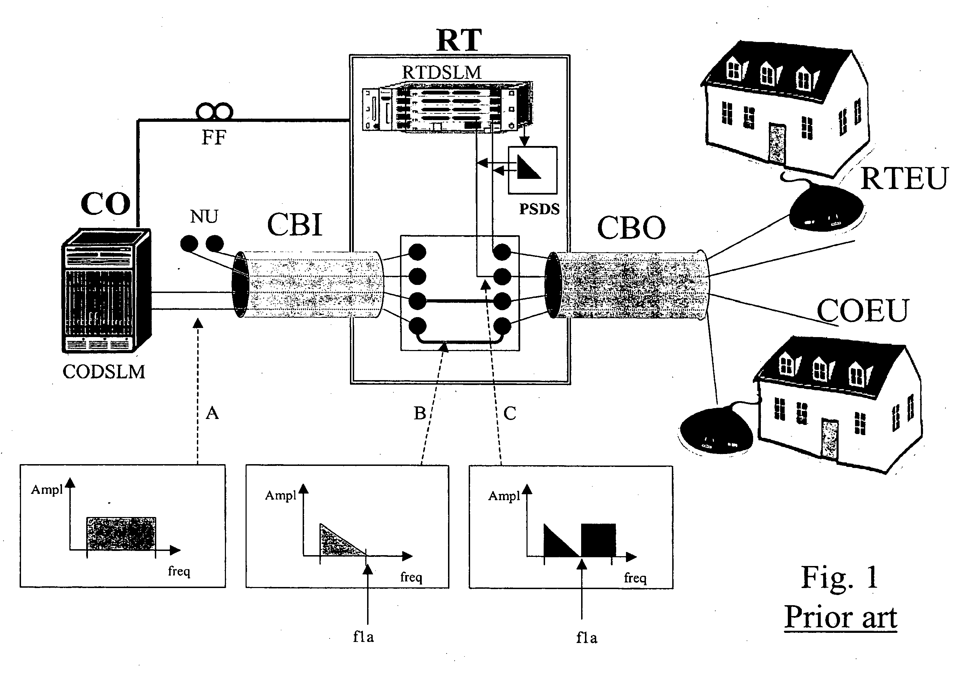

The telecommunication system shown at Fig. 1 is a classical system as known from prior art and comprises a Remote Terminal RT having DSL modems RTDSLM coupled to a Central Office CO via a fiber feeding FF and coupled to a plurality of End-Customers or End-Users RTEU via wires of a cable binder CBO. The central office CO, or more particularly at least one DSL modem CODSLM thereof, is coupled to another plurality of end-customers COEU via the cascade coupling of wires of another cable binder CBI, a distribution frame located in the remote terminal RT and other wires of the cable binder CBO. A distribution frame of the remote terminal RT interconnects the wires of the cable binder CBI with the other wires of the cable binder CBO.

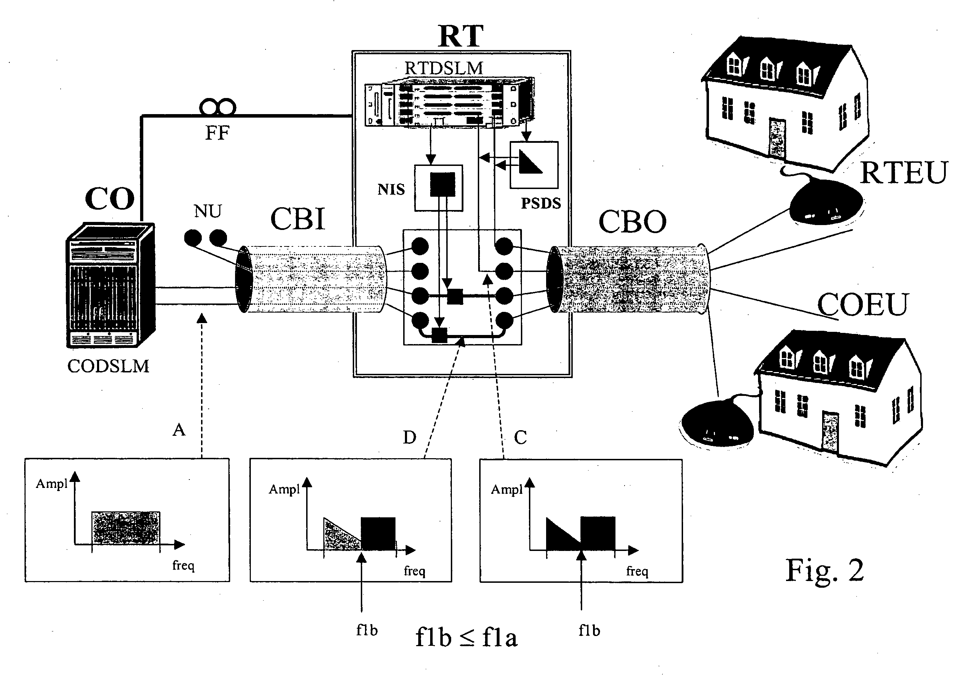

It is to be noted that in the Figs. 1 and 2 each line shown in a cable binder represents a twisted pair of wires and that some wires, e.g. NU, of cable binders may not be used.

The remote terminal of the prior art (Fig. 1) further comprises a Power Spectral Density shaper PSDS, whilst the remote terminal of the invention additionally comprises a noise generator NIS, as shown at Fig. 2.

The frequency spectrum of first data carrying signals at the central office CO and intended to be transmitted to the first end-consumers COEU has a transmit shape close to the maximum allowed Power Spectral Density PSD limit (aka limit mask). This is schematically represented by a substantially rectangular shape on the PSD versus frequency diagram A at the Figs. 1 and 2. Because of the downstream attenuation, when they arrive at the distribution frame of the remote terminal RT, at the end of the first cable binder CBI, this transmitted shape is attenuated with an attenuation that increases with frequency as shown on the PSD versus frequency diagram B at Fig. 1.

In order to reduce the crosstalk between twisted pairs in the second cable binder CBO between the remote terminal RT and the first COEU and the second RTEU end-customers, the Power Spectral Density shaper PSDS arranges the frequency spectrum of signals transmitted from the remote terminal RT to the second end-customers RTEU into a shape that is similar to the shape of the frequency spectrum of the signals received at RT from the central office CO and intended to the first end-customers COEU, within the same frequency range.

As a result, the frequency spectrum of second data carrying signals transmitted from the remote terminal RT to the second end-consumers RTEU, which are formerly transmitted at the maximum allowed PSD mask has its lower frequency part transformed by the Power Spectral Density shaper PSDS into a modified shape with a transmit PSD that decreases with frequency for the same frequency range as the first signals transmitted from the central office CO to the first end-consumers COEU. For higher frequencies, the frequency spectrum of the second signals transmitted from the remote terminal RT to the second end-consumers RTEU keeps its former maximum allowed PSD mask. The final shape of the frequency spectrum of the second signals transmitted from the remote terminal RT to the second end-consumers RTEU is shown on the PSD versus frequency diagram C at the Figs. 1 and 2.

In more detail, the power spectral density shaper PSDS arranges the frequency spectrum of signals transmitted from the remote terminal RT to the second end-customers RTEU into modified shape of which the transmit PSD decreases with the frequency within a first frequency range going up to a split-frequency f1, and which keeps a substantially high PSD level for higher frequencies. The split-frequency f1a, between the shaped part the maximum PSD level, corresponds substantially to the highest frequency of the signals passing via the remote terminal RT from the central office CO.

As shown at Fig. 2, the noise generator NIS injects, at the location of the remote terminal RT, an artificial noise in the signals passing by from the central office CO. This artificial noise is injected within a frequency range of which the lowest frequency substantially corresponds to the chosen split frequency f1b and of which the highest frequency corresponds to the highest frequency of the signals from the remote RT to the second end-consumers RTEU. The frequency spectrum of this artificial noise has a shape that is similar to the shape of the frequency range of the signals from the remote RT to the second end-consumers RTEU within the same higher frequency range.

The shape of this noise is calculated as such that the artificial split frequency f1b is forced upon the CO-RT mixed system, which could be set network-wide or per RT node. The chosen split frequency f1b can be lower than the given split frequency f1a from the prior art. The noise injected into the CO line has a start frequency equal to the desired split frequency, and will mislead the downstream receiver of the CO line. As such, those frequencies will not be used by the CO lines, and the RT lines can send full power over those.

At the location of the distribution frame located in the remote terminal RT the frequency spectrum of the signals received from the central office CO and intended to the first end-consumers COEU, which formerly had a substantially triangular shape of which the amplitude decreases with the frequency up to the split frequency f1b, now additionally has a component in the higher frequencies.

In a preferred embodiment (not shown), the remote terminal RT comprises a frequency detection circuit able to define accurately the split frequency f1a. This detection is based on the detection of the highest useful frequency of the signals received at the remote terminal RT form the central office CO.

The split frequency f1 defines the so-called "protected" and "unprotected" frequency bands and because the injected noise has same spectrum as the RT injected signals, it makes it impossible for the CO lines to use those higher frequencies to transport data.

Without the injection of the artificial noise, the strong RT signals will couple through crosstalk into the CO signals in the second cable binder CBO and thereby blow away the weak CO signal, mainly at high frequencies. Owing to the noise injection, the CO line will no longer loose performance and risk instability.

As an example, consider the case where ADSL from CO needs to be mixed with ADSL from the RT. The CO-ADSL signal will not be able to sustain all of its 255 carriers as soon as the CO-RT attenuation exceeds a certain threshold. This threshold is dependent on cable type, cable diameter, and physical distance between CO and RT. The desired split frequency f1b can be calculated network wide (e.g. on tone 120) as such that all end-customers, whether connected at a CO line (COEU) or at a RT line (RTEU), can get a similar amount of minimum bitrate, without risk on instabilities.

The level of injected noise can be calculated based on similar parameters used for RT PSD Shaping, e.g. based on cable characteristics and distance between CO and RT. A simple shape, as the rectangular one mentioned above, or a complex one following the CO signal level could be used.

Different mechanisms can be used to inject the noise :
- by a high impedance coupler on the distribution frame of the remote terminal RT;
- by means of a coil around the CO lines passing the RT, and injecting common-mode signals into that coil; or
- by means of signal injection from the RT into the "unused" pairs of wires NU of the first cable binder CBI between the CO and RT. With unused is meant those lines which have been cut in the RT and which are not directly connected to CO.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A noise management circuit for a Remote Terminal (RT) of a telecommunication system comprising a Central Office (CO) and a plurality of End-Customers (COEU, RTEU),
said central office (CO) being coupled to first end-customers (COEU) of said plurality for transmitting first signals to said first end-customers (COEU) via wires of a first cable binder (CBI), via said remote terminal (RT) and via first wires of a second cable binder (CBO),
said remote terminal (RT) being further coupled to second end-customers (RTEU) of said plurality for transmitting second signals to said second end-customers (RTEU) via second wires of said second cable binder (CBO), and
said noise management circuit comprising a Power Spectral Density Shaper (PSDS) adapted to arrange the frequency spectrum of said second signals within a frequency range overlapping the frequency range of said first signals,
***characterized in that*** said noise management circuit further comprises a noise generator (NIS) adapted to inject a controllable frequency-dependent level of artificial noise into said first signals when passing via said remote terminal (RT).

2. The noise management circuit according to claim 1,
***characterized in that*** said power spectral density shaper (PSDS) is adapted to arrange the frequency spectrum of said second signals into a shape that is similar to that of the frequency spectrum of said artificial noise injected into said first signals when passing via said remote terminal (RT).

3. The noise management circuit according to claim 1,
***characterized in that*** said power spectral density shaper (PSDS) is adapted to arrange the frequency spectrum of said second signals into a shape that is similar to that of the frequency spectrum of said first signals when passing via said remote terminal (RT) within a first frequency range going up to a split-frequency (f1b),
***and in that*** said noise generator (NIS) is adapted to inject said artificial noise into said first signals when passing via said remote terminal (RT) for a second frequency range of which the lowest frequency corresponds substantially to said split frequency.

4. The noise management circuit according to claim 1,
***characterized in that*** said power spectral density shaper (PSDS) is adapted to arrange the frequency spectrum of said second signals into a shape that is similar to that of the frequency spectrum of said first signals when passing via said remote terminal (RT) within a first frequency range going up to a split-frequency (f1b) and to arrange the frequency spectrum in a second frequency range of which the lowest frequency corresponds to said split frequency to a level close to the maximum allowed spectrum,
***and in that*** said noise generator (NIS) is adapted to inject said artificial noise into said first signals when passing via said remote terminal (RT) for said second frequency range.

5. The noise management circuit according to claim 1,
***characterized in that*** said power spectral density shaper (PSDS) is adapted to arrange the frequency spectrum of said second signals into a shape that is similar to that of the frequency spectrum of said first signals when passing via said remote terminal (RT) within a first frequency range going up to a split-frequency (f1a) and to arrange the frequency spectrum in a second frequency range of which the lowest frequency corresponds to said split frequency to a level close to the maximum allowed spectrum,
***and in that*** said noise generator (NIS) is adapted to inject said artificial noise into said first signals when passing via said remote terminal (RT) for a third frequency range which is largely overlapping with said second frequency range, but which starts from the split frequency.

6. The noise management circuit according to any of the claims 3 to 5,
***characterized in that*** said noise management circuit further comprises a frequency detection circuit adapted to define said split frequency (f1b).

7. The noise management circuit according to claim 1,
***characterized in that*** said remote terminal (RT) is adapted to transmit Digital Subscriber Line DSL signals to said to first end-customers (COEU) and to said second end-customers (RTEU).

8. The noise management circuit according to any of the preceding claims,
***characterized in that*** said first signals and said second signals both are data carrying signals.

## Patentansprüche

1. Rauschmanagementschaltung für ein entferntes Endgerät (RT) eines Telekommunikationssystems mit einer Vermittlungsstelle (CO) und einer Vielzahl von Endkunden (COEU, RTEU),
wobei die besagte Vermittlungsstelle (CO) an erste einer Vielzahl von Endkunden (COEU) für die Übertragung von ersten Signalen an die besagten ersten Endkunden (COEU) über Drähte eines ersten Kabelbinders (CBI), über das besagte entfernte Endgerät (RT) und über erste Drähte eines zweiten Kabelbinders (CBO) gekoppelt ist,
wobei das besagte entfernte Endgerät (RT) weiterhin an zweite der besagten Vielzahl von Endkunden (RTEU) für die Übertragung von zweiten Signalen an die besagten zweiten Endkunden (RTEU) über zweite Drähte eines zweiten Kabelbinders (CBO) gekoppelt ist, und
wobei die besagte Rauschmanagementschaltung einen Former der Leistungsspektraldichte (PSDS) umfasst, welcher für das Anordnen des Frequenzspektrums der besagten zweiten Signale innerhalb eines Frequenzbereichs, welcher den Frequenzbereich der besagten ersten Signale überschneidet, ausgelegt ist,
***dadurch gekennzeichnet, dass*** die besagte Rauschmanagementschaltung weiterhin einen Rauscherzeuger (NIS) umfasst, welcher dazu ausgelegt ist, einen steuerbaren, frequenzabhängigen Pegel eines künstlichen Rauschens in die besagten ersten Signale einzuspeisen, wenn diese das besagte entfernte Endgerät (RT) durchlaufen.

2. Rauschmanagementschaltung nach Anspruch 1,
***dadurch gekennzeichnet, dass*** der besagte Former der Leistungsspektraldichte (PSDS) dazu ausgelegt ist, das Frequenzspektrum der besagten zweiten Signale in einer Form anzuordnen, welche der Form des Frequenzspektrums des besagten in die besagten ersten Signale, wenn diese das besagte entfernte Endgerät (RT) durchlaufen, eingespeisten künstlichen Rauschens ähnlich ist.

3. Rauschmanagementschaltung nach Anspruch 1,
***dadurch gekennzeichnet, dass*** der besagte Former der Leistungsspektraldichte (PSDS) dazu ausgelegt ist, das Frequenzspektrum der besagten zweiten Signale in einer Form anzuordnen, welche der Form des Frequenzspektrums der besagten ersten Signale, wenn diese das besagte entfernte Endgerät (RT) innerhalb eines ersten Frequenzbereichs, welcher bis zu einer aufgeteilten Frequenz (f1b) reicht, durchlaufen, ähnlich ist,
***und dass*** der besagte Rauscherzeuger (NIS) dazu ausgelegt ist, das besagte künstliche Rauschen in die besagten ersten Signale einzuspeisen, wenn diese das besagte entfernte Endgerät (RT) durchlaufen, für einen zweiten Frequenzbereich, dessen niedrigste Frequenz im Wesentlichen der besagten aufgeteilten Frequenz entspricht.

4. Rauschmanagementschaltung nach Anspruch 1,
***dadurch gekennzeichnet, dass*** der besagte Former der Leistungsspektraldichte (PSDS) dazu ausgelegt ist, das Frequenzspektrum der besagten zweiten Signale in einer Form anzuordnen, welche der Form des Frequenzspektrums der besagten ersten Signale, wenn diese das besagte entfernte Endgerät (RT) innerhalb eines ersten Frequenzbereichs, welcher bis zu einer aufgeteilten Frequenz (f1b) reicht, durchlaufen, ähnlich ist, und das Frequenzspektrum in einem zweiten Frequenzbereich anzuordnen, dessen niedrigste Frequenz im Wesentlichen der besagten aufgeteilten Frequenz entspricht, bei einem Pegel, welcher an das höchste zulässige Spektrum grenzt,
***und dass*** der besagte Rauscherzeuger (NIS) dazu ausgelegt ist, das besagte künstliche Rauschen in die besagten ersten Signale einzuspeisen, wenn diese das besagte entfernte Endgerät (RT) durchlaufen, für den besagten zweiten Frequenzbereich.

5. Rauschmanagementschaltung nach Anspruch 1,
***dadurch gekennzeichnet, dass*** der besagte Former der Leistungsspektraldichte (PSDS) dazu ausgelegt ist, das Frequenzspektrum der besagten zweiten Signale in einer Form anzuordnen, welche der Form des Frequenzspektrums der besagten ersten Signale, wenn diese das besagte entfernte Endgerät (RT) innerhalb eines ersten Frequenzbereichs, welcher bis zu einer aufgeteilten Frequenz (f1b) reicht, durchlaufen, ähnlich ist, und das Frequenzspektrum in einem zweiten Frequenzbereich, dessen niedrigste Frequenz im Wesentlichen der besagten aufgeteilten Frequenz entspricht, bei einem Pegel, welcher an das höchste zulässige Spektrum grenzt,
***und dass*** der besagte Rauscherzeuger (NIS) dazu ausgelegt ist, das besagte künstliche Rauschen in die besagten ersten Signale einzuspeisen, wenn diese das besagte entfernte Endgerät (RT) durchlaufen, für einen dritten Frequenzbereich, welcher den besagten zweiten Frequenzbereich weit überschneidet, jedoch von der aufgeteilten Frequenz ausgeht.

6. Rauschmanagementschaltung nach einem beliebigen der Ansprüche 3 bis 5,
***dadurch gekennzeichnet, dass*** die besagte Rauschmanagementschaltung eine Frequenzdetektionsschaltung umfasst, welche für das Definieren der besagten aufgeteilten Frequenz (f1 b) ausgelegt ist.

7. Rauschmanagementschaltung nach Anspruch 1,
***dadurch gekennzeichnet, dass*** das besagte entfernte Endgerät (RT) für das Übertragen von Digital Subscriber Line- bzw. DSL-Signalen an die besagten ersten Endkunden (COEU) und an die besagten zweiten Endkunden (RTEU) ausgelegt ist.

8. Rauschmanagementschaltung nach einem beliebigen der vorstehenden Ansprüche,
***dadurch gekennzeichnet, dass*** die besagten ersten Signale und die besagten zweiten Signale beide Datentransportsignale sind.

## Revendications

1. Circuit de gestion du bruit pour un terminal à distance (RT) d'un système de télécommunication comprenant un central (CO) et une pluralité de clients finaux (COEU, RTEU),
ledit central (CO) étant couplé aux premiers clients finaux (COEU) de ladite pluralité pour transmettre des premiers signaux auxdits premiers clients finaux (COEU) par l'intermédiaire des fils d'une première liaison de câbles (CBI), par l'intermédiaire dudit terminal à distance (RT) et par l'intermédiaire des premiers fils d'une deuxième liaison de câbles (CBO),
ledit terminal à distance (RT) étant en outre couplé aux deuxièmes clients finaux (RTEU) de ladite pluralité pour transmettre des deuxièmes signaux auxdits deuxièmes clients finaux (RTEU) par l'intermédiaire des deuxièmes fils de ladite deuxième liaison de câbles (CBO), et
ledit circuit de gestion du bruit comprenant un dispositif de mise en forme de la densité spectrale de puissance (PSDS) adapté pour disposer le spectre de fréquences desdits deuxièmes signaux dans une plage de fréquences chevauchant la plage de fréquences desdits premiers signaux,
***caractérisé en ce que*** ledit circuit de gestion du bruit comprend en outre un générateur de bruit (NIS) adapté pour injecter un niveau contrôlable dépendant de la fréquence de bruit artificiel dans lesdits premiers signaux lorsqu'ils traversent ledit terminal à distance (RT).

2. Circuit de gestion du bruit selon la revendication 1,
***caractérisé en ce que*** ledit dispositif de mise en forme de la densité spectrale de puissance (PSDS) est adapté pour disposer le spectre de fréquences desdits deuxièmes signaux dans une forme qui est identique à celle du spectre de fréquences dudit bruit artificiel injecté dans lesdits premiers signaux lorsqu'ils traversent ledit terminal à distance (RT)..

3. Circuit de gestion du bruit selon la revendication 1,
***caractérisé en ce que*** ledit dispositif de mise en forme de la densité spectrale de puissance (PSDS) est adapté pour disposer le spectre de fréquences desdits deuxièmes signaux dans une forme qui est identique à celle du spectre de fréquences desdits premiers signaux lorsqu'ils traversent ledit terminal à distance (RT) dans une première plage de fréquences allant jusqu'à une fréquence de division (f1b),
***et en ce que*** ledit générateur de bruit (NIS) est adapté pour injecter ledit bruit artificiel dans lesdits premiers signaux lorsqu'ils traversent ledit terminal à distance (RT) pour une deuxième plage de fréquences dont la fréquence la plus faible correspond sensiblement à ladite fréquence de division.

4. Circuit de gestion du bruit selon la revendication 1,
***caractérisé en ce que*** ledit dispositif de mise en forme de la densité spectrale de puissance (PSDS) est adapté pour disposer le spectre de fréquences desdits deuxièmes signaux dans une forme qui est identique à celle du spectre de fréquences desdits premiers signaux lorsqu'ils traversent ledit terminal à distance (RT) dans une première plage de fréquences allant jusqu'à une fréquence de division (f1b) et pour disposer le spectre de fréquences dans une deuxième plage de fréquences dont la fréquence la plus faible correspond à ladite fréquence de division à un niveau proche du spectre maximal autorisé,
***et en ce que*** ledit générateur de bruit (NIS) est adapté pour injecter ledit bruit artificiel dans lesdits premiers signaux lorsqu'ils traversent ledit terminal à distance (RT) pour ladite deuxième plage de fréquences.

5. Circuit de gestion du bruit selon la revendication 1,
***caractérisé en ce que*** ledit dispositif de mise en forme de la densité spectrale de puissance (PSDS) est adapté pour disposer le spectre de fréquences desdits deuxièmes signaux dans une forme qui est identique à celle du spectre de fréquences desdits premiers signaux lorsqu'ils traversent ledit terminal à distance (RT) dans une première plage de fréquences allant jusqu'à une fréquence de division (f1a) et pour disposer le spectre de fréquences dans une deuxième plage de fréquences dont la fréquence la plus faible correspond à ladite fréquence de division à un niveau proche du spectre maximal autorisé,
***et en ce que*** ledit générateur de bruit (NIS) est adapté pour injecter ledit bruit artificiel dans lesdits premiers signaux lorsqu'ils traversent ledit terminal à distance (RT) pour une troisième plage de fréquences qui chevauche en grande partie ladite deuxième plage de fréquences, mais qui débute à la fréquence de division.

6. Circuit de gestion du bruit selon l'une quelconque des revendications 3 à 5,
***caractérisé en ce que*** ledit circuit de gestion du bruit comprend en outre un circuit de détection de fréquence adapté pour définir ladite fréquence de division (f1b).

7. Circuit de gestion du bruit selon la revendication 1,
***caractérisé en ce que*** ledit terminal à distance (RT) est adapté pour transmettre des signaux de ligne d'abonné numérique DSL auxdits premiers clients finaux (COEU) et auxdits deuxièmes clients finaux (RTEU).

8. Circuit de gestion du bruit selon l'une quelconque des revendications précédentes,
***caractérisé en ce que*** lesdits premiers signaux et lesdits deuxièmes signaux sont des signaux transportant des données.
